(19) **Europäisches Patentamt**
**European Patent Office**
**Office européen des brevets**

(11) **EP 4 184 414 A1**

(12) **EUROPEAN PATENT APPLICATION**
published in accordance with Art. 153(4) EPC

(43) Date of publication:
**24.05.2023 Bulletin 2023/21**

(21) Application number: **21847334.6**

(22) Date of filing: **22.07.2021**

(51) International Patent Classification (IPC):
$G06Q\ 30/06^{(2023.01)}$ $G06K\ 9/62^{(2022.01)}$
$G06N\ 3/08^{(2023.01)}$ $G06F\ 16/53^{(2019.01)}$
$G06T\ 7/187^{(2017.01)}$ $G06T\ 5/00^{(2006.01)}$

(86) International application number:
**PCT/KR2021/009473**

(87) International publication number:
**WO 2022/019670 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.07.2020 KR 20200091775**

(71) Applicant: **Urbanbase Inc.**
**Seoul 06614 (KR)**

(72) Inventors:
• **BAEK, Yunah**
**Anyang-si Seoul 14070 (KR)**
• **YUN, Dae Hee**
**Seoul 02008 (KR)**

(74) Representative: **BCKIP Part mbB**
**Siegfriedstraße 8**
**80803 München (DE)**

(54) **PRODUCT RECOMMENDATION DEVICE AND METHOD BASED ON IMAGE DATABASE ANALYSIS**

(57) An apparatus for recommending product based on image database analysis performs, through a processor, acquiring an image database including an image file for a product placed in a predetermined space, extracting metadata specifying a use of a space, a type of an object, a style of the space, and a color combination matching color, which are included in the image file, and mapping the metadata to the image file or product information of the product, determining a category for at least one of the use of the space, the type of the object, the style of the space, or the color combination as category information for selection of a predetermined product, and searching for and recommending the image file or the product information mapped to the metadata corresponding to the determined category from the image database.

Fig.1

**Description**

**TECHNICAL FIELD**

The present disclosure relates to an apparatus and method of recommending a product based on an image database.

**BACKGROUND**

According to the Korea Internet & Security Agency (KISA), the size of a domestic online shopping market aggregated in 2019 is about 133 trillion won, showing a growth of about 20% compared to 111 trillion won in 2018. As a growth rate of the online shopping market increases sharply, the number of stores and products registered on an online shopping platform is rapidly increasing, and a ratio of consumers purchasing products through online stores rather than offline stores is increasing significantly.

In the form of offline shopping, a consumer selects a store and visually checks products provided in the store to purchase a favorite product, whereas in the form of online shopping, consumers search for and purchase a product through keywords of a desired product, and as a platform on which products are sold changes, the form in which consumers find a product is also changing.

Therefore, in online shopping, it is becoming very important to well set keywords related to products so as to introduce traffic of consumers to product pages. However, it is difficult to set keywords for each product in a situation where there are more than 400 million products uploaded to the top 10 online shopping malls in Korea, and accordingly, there is a demand for a solution with a function to set keywords for a product only with an image file of the product in an online shopping mall.

At this time, elements constituting an image of a product may be largely divided into a space, an object, a style (atmosphere) of a background in which the product is used, and a color. Because buyers also consider a use of the space in which the product is used, the product itself, the atmosphere of the space, and the color of the space as important factors when searching for a product, the buyers search for the product by combining any one keyword of the space, object, style, and color that constitute the product image.

As such, there are image classification algorithms using artificial intelligence as a representative technology to be introduced in a situation in which a solution for automatically extracting keywords for a space, an object, a style, and a color from an image of a product is required. In order to accurately classify spaces, objects, styles, and colors from product images, there are many factors to be considered, such as data quality, a data quantity, a labeling method, and ease of learning. Accordingly, there is a need for a technology for generating a model having accurate performance while generating various learning data and facilitating learning of an artificial intelligence model.

**SUMMARY**

An object of an embodiment of the present disclosure is to provide a technology for automatically extracting metadata specifying a use of a space, products placed in the space, atmosphere of the space, and a color combination matching the color of the space, which are indicated by an image included in a database with respect to a database including a vast image for a space, a product, etc. held by a shopping mall.

In this case, an image classification artificial intelligence algorithm, which is a technology in an embodiment of the present disclosure, may have a large difference in the performance of a model depending on the quantity and quality of learning data used in learning. In particular, in the case of learning of the artificial intelligence model, in order to create a model with excellent performance even with limited learning data, it may be important to train the model through learning data including variables of various environments or situations in which the model is to be actually used. The present disclosure may provide a data augmentation technology for generating learning data including variables of various environments or situations in which the model is to be actually used in generating a model for classifying various information contained in a space image.

However, the technical problems solved by the embodiments may not be limited to the above technical problems and may be variously expanded without are departing from the spirit and scope of the present disclosure.

According to an embodiment of the present disclosure, an apparatus for recommending product based on image database analysis includes one or more memories configured to store commands for performing a predetermined operation, and one or more processors operatively connected to the one or more memories and configured to execute the commands, wherein an operation perform by the processor includes acquiring an image database including an image file for a product placed in a predetermined space, extracting metadata specifying a use of a space, a type of an object, a style of the space, and a color combination matching color, which are included in the image file, and mapping the metadata to the image file or product information of the product, determining a category for at least one of the use of the space, the type of the object, the style of the space, or the color combination as category information for selection of a predetermined product, and searching for and recommending the image file or the product information mapped to the metadata corresponding to the determined category from the image database.

The determining the category may include acquiring a first image by photographing a space of a user, extracting metadata specifying a use of a space, a type of an object, a style of the space, and a color combination, which are included in the first image, and determining product selection in a category, which does not include metadata for the type of the object extracted from the first image and includes metadata for a use of a space, a style of the space, and a color combination extracted from a sample image.

The determining the category may include acquiring a first image by photographing a space of a user, extracting metadata specifying a use of a space, a type of an object, a style of the space, and a color combination, which are included in the first image, and determining product selection of a category, which includes metadata for one object selected by the user among metadata for the type of the object extracted from the first image and includes metadata for the use of the space, the style of the space, and the color combination, extracted from the first image.

The mapping the metadata may further include extracting the metadata using a first neural network model specifying a use of a space included in a space image, wherein the first neural network model is generated by performing an operation by a processor, the operation including acquiring a plurality of space images and labeling a class specifying space information corresponding to each of the plurality of space images or acquiring a plurality of space images with a class labeled thereto and generating learning data, augmenting the learning data by generating a second space image obtained by changing some or all of pixel information included in the first space image among the plurality of space images, labeling a class labeled to the first space image to the second space image, and inputting the augmented learning data to a model designed based on a predetermined image classification algorithm, learning a weight of the model that derives a correlation between the space image included in the learning data and a class labeled to the space image, and generating a model for determining a class for the space image based on the correlation.

The mapping the metadata may further include extracting the metadata using a second neural network model specifying a type of an object included in a space image, and the second neural network model may be generated by performing an operation by a processor, the operation including acquiring a first space image including a first object image and generating a second space image by changing pixel information included in the first space image, specifying a bounding box in an area including the first object image in the first space image and labeling a first class specifying the first object image in the bounding box, inputting a model designed based on a predetermined image classification algorithm, primarily learning a weight of the model that derives a correlation between the first object image in the bounding box and the first class, and generating a model specifying an object image included in a space image based on the correlation, inputting the second space image to the primarily learned model, and labeling a bounding box in which the model specifies a second object image in the second space image and a second class determined for the second object image by the model, to the second space image, and generating a model that secondarily learns a weight of the model based on the second space image.

The mapping the metadata may further include extracting the metadata using a third neural network model specifying a style of a space included in a space image, and the third neural network model may be generated by performing an operation by a processor, the operation including acquiring a plurality of space images and labeling a class specifying style information corresponding to each of the plurality of space images or acquiring a plurality of space images with the class labeled thereto and generating learning data, augmenting the learning data by generating a second space image obtained by changing pixel information included in the first space image among the plurality of space images within a predetermined range, labeling the class labeled to the first space image to the second space image, and inputting the augmented learning data to a model designed based on a predetermined image classification algorithm, learning a weight of the model that derives a correlation between the space image included in the learning data and a class labeled to each space image, and generating a model for determining a class for a style of the space image based on the correlation.

The generating the second space image may include generating the second space image by changing an element value (x, y, z) constituting RGB information of pixel information included in the first space image to increase an element value having a larger value than a predetermined reference value and reduce an element value having a smaller value than the predetermined reference value.

The generating the second space image includes generating the second space image from the first space image based on Equation 1:

[Equation 1]

$$dst(I) = round(\max(0, \min(\alpha * src(I) - \beta, 255)))$$

where src(I): element value before change of pixel information (x, y, z), α: constant, β: constant, and dst(I) : element value after change of pixel information (x', y' , z').

The generating the second space image includes generating the second space image from the first space image based on Equation 2:

[Equation 2]

$$dst(I)=round(\max(0,\min(src(I)\pm\gamma,255)))$$

where src(I): element value before change of pixel information (x, y, z), γ: random number less than or equal to preset value n, and dst(I): element value after change of pixel information (x', y', z').

The generating the second space image includes generating the second space image from the first space image based on Equation 3:

[Equation 3]

$$Y=0.1667*R+0.5*G+0.3334*B$$

where R: x of RGB information (x, y, z) of pixel information, G: y of RGB information (x, y, z) of pixel information, B: z of RGB information (x, y, z) of pixel information, and Y: element value after change of pixel information (x', y', z').

The generating the second space image includes generating the second space image from the first space image based on Equations 4 and 5:

[Equation 4]

$$dst(I)=round(\max(0,\min(\alpha*src(I)-\beta,255)))$$

where src(I): element value before change of pixel information, α: constant, β: constant, and dst(I): element value after change of pixel information (x', y', z'), and

[Equation 5]

$$Y=0.1667*R+0.5*G+0.3334*B$$

where R: x' of (x', y', z') of the dst(I), G: y' of (x', y', z') of the dst(I), B: z' of (x', y', z') of the dst(I), and Y: element value after change of pixel information (x", y", z").

The generating the second space image may include generating the second space image by adding noise information to some of pixel information included in the first space image.

The generating the second space image includes generating the second space image by adding noise information to pixel information of the first space image based on Equation 6:

[Equation 6]

$$dst(I)=round(\max(0,\min(src(I)\pm N,255)))$$

where src(I): element value before change of pixel information (x, y, z), N: random number, and dst(I): element value after change of pixel information (x', y', z').

The generating the second space image may include generating the second space image by calculating (R_max-R_avg, G_max-G_avg, B_max-B_avg) by subtracting (R_avg, G_avg, B_avg) as respective average values of R, G, and B of the plurality of pixels from (R_max, G_max, B_max) as a maximum element value among element values of R, G, and B of a plurality of pixels contained in an NxN (N being a natural number equal to or greater than 3) matrix size including a first pixel at a center among pixels included in the first space image, and performing an operation of blur processing the first pixel when any one of element values of the (R_max-R_avg, G_max-G_avg, B_max-B_avg) is smaller than a preset value.

The generating the second space image may include generating the second space image into which noise information is inserted by generating random number information that follows standard Gaussian normal distribution with an average of 0 and a standard deviation of 100 as much as a number of all pixels included in the first space image, and summing the random number information to each of all pixels.

The generating the secondarily learned model may include inputting the second space image to the primarily learned model, secondarily learning a weight of a model that derives a correlation between the second object image and the second class, and generating a model specifying an object image included in a space image and determining a class based on the correlation.

The labeling the second space image may include inputting the second space image to the primarily learned model, comparing the second class determined for the second object image by the model with the first class, and performing an operation of maintaining a value of the second class when the second class and the first class are equal to each other and correcting the value of the second class to a value equal to the first class when the second class is different from the first class.

The bounding box may be configured to include one object image per bounding box and include all border regions of the object image in the bounding box.

The specifying the color combination of the mapping the metadata may include receiving a space image included in the image file, determining a type of a color configuring the space image and a ratio in which the type of the color is used in the space image, selecting a first color as a part of the color configuring the space image in order of increasing the ratio of the color used in the space image, determining an element value in which each of the first colors is positioned on a predetermined color image scale using soft and dynamic elements, calculating a combined color combination element value by weighting the element value of each of the first colors using the ratio of each of the first colors used in the space image as a weight, and recommending a color combination group including the color combination element value on the color image scale as a color combination suitable for the space image.

The determining the ratio may include determining the type of the color configuring the space image and the ratio in which each type of the color is used in the space image by analyzing the space image based on a k-means clustering algorithm.

The selecting the first color may include selecting n (n being a natural number) colors configuring the space image in order of increasing the ratio of the color used in the space image, and selecting color until a cumulative ratio of color obtained by accumulating colors in order of increasing a ratio of colors among the n colors exceeds a% (a being a natural number less than or equal to 100) as the color.

The calculating the color combination element value may include calculating the color combination element value by applying a weighted arithmetic mean to the element value of each of the first colors using a ratio of each of the first colors used in the space image as a weight.

The calculating the color combination element value may include calculating the color combination element value by applying a weighted arithmetic mean to a two-dimensional element value of each of the first colors using a ratio derived when converting a sum of ratios used in each of the first colors in the space image to 100% as a weight for each of the first colors.

The calculating the color combination element value may include calculating the color combination element value using Equation 7:

[Equation 7]

$$S_{av} = \sum_{k=1}^{N} \frac{a_k \times S_k}{100} \quad (a_1 + a_2 + \ldots + a_n = 100)$$

$$D_{av} = \sum_{k=1}^{N} \frac{a_k \times D_k}{100} \quad (a_1 + a_2 + \ldots + a_n = 100)$$

where N = number of first colors, a = ratio of using one first color when converting the sum of ratios of N first colors used in a space image to 100%, S: soft element value, D: dynamic element value, $S_{av}$: weighted arithmetic mean element value for soft values of first colors, and $D_{av}$: weighted arithmetic mean element value for dynamic values of first colors.

A method of recommending product based on image database analysis performed by an apparatus for recommending product based on image database analysis according to an embodiment of the present disclosure may include acquiring an image database including an image file for a product placed in a predetermined space, extracting metadata specifying a use of a space, a type of an object, a style of the space, and a color combination matching color, which are included in the image file, and mapping the metadata to the image file or product information of the product, determining a category for at least one of the use of the space, the type of the object, the style of the space, or the color combination as category information for selection of a predetermined product, and searching for and recommending the image file or the product information mapped to the metadata corresponding to the determined category from the image database.

## BRIEF DESCRIPTION OF THE DRAWINGS

FIG. 1 is an exemplary diagram showing a case in which an image database analysis-based product recommendation apparatus according to an embodiment of the present disclosure recommends products by specifying a use of a space, a type of an object, a style of a space, and color matching with the space.

FIG. 2 is a functional block diagram of an image database analysis-based product recommendation apparatus according to an embodiment of the present disclosure.

FIG. 3 is an operation flowchart of an image database analysis-based product recommendation apparatus according to an embodiment of the present disclosure.

FIG. 4 is an exemplary diagram of an operation of learning a second neural network model for classifying an object by an image database analysis-based product recommendation apparatus according to an embodiment of the present disclosure.

FIG. 5 is an exemplary diagram for explaining a class determined by a third neural network for classifying a style for a space according to an embodiment of the present disclosure.

FIG. 6 is an exemplary diagram of a second space image generated according to an embodiment of augmenting data by modifying pixel information included in a first space image.

FIG. 7 is an exemplary diagram of a second space image 'b' formed by changing pixel information of a first space image 'a' within a predetermined range by an apparatus for recommending product based on image database analysis.

FIG. 8A is an exemplary diagram of a second space image generated according to an embodiment for augmenting data by applying a gray scale to pixel information included in a first space image.

FIG. 8B is an exemplary diagram of a second space image generated according to an embodiment for augmenting data by adding noise of some of pixel information included in a first space image.

FIG. 9 is an exemplary diagram for explaining a method of generating a second space image by identifying a border region of an object included in a first space image and applying a blur to an area other than the border.

FIG. 10 is an exemplary diagram of a second space image generated according to an embodiment of augmenting data by adding noise information according to the Gaussian normal distribution to a first space image.

FIG. 11 is an exemplary diagram for explaining an operation of extracting five colors and usage ratios mainly used for a space image by an image database analysis-based product recommendation apparatus according to an embodiment of the present disclosure.

FIG. 12 is an exemplary diagram of a color image scale in which colors are arranged in a two-dimensional coordinate plane with soft and dynamic axes.

FIG. 13 is an exemplary diagram of groups classified based on ranges of soft values and dynamic values for colors on a color image scale.

FIG. 14 is an exemplary diagram in which colors included in a color palette are arranged on a three-dimensional coordinate plane with R, G, and B as axes.

## DETAILED DESCRIPTION

The attached drawings for illustrating exemplary embodiments of the present disclosure are referred to in order to gain a sufficient understanding of the present disclosure, the merits thereof, and the objectives accomplished by the implementation of the present disclosure. The present disclosure may, however, be embodied in many different forms and should not be construed as being limited to the embodiments set forth herein; rather, these embodiments are provided so that this disclosure will be thorough and complete, and will fully convey the concept of the present disclosure to one of ordinary skill in the art. Meanwhile, the terminology used herein is for the purpose of describing particular embodiments and is not intended to limit the present disclosure.

In the following description of the present disclosure, a detailed description of known functions and configurations incorporated herein will be omitted when it may make the subject matter of the present disclosure unclear. The terms used in the specification are defined in consideration of functions used in the present disclosure, and may be changed

6

according to the intent or conventionally used methods of clients, operators, and users.

Accordingly, definitions of the terms should be understood on the basis of the entire description of the present specification.

The functional blocks shown in the drawings and described below are merely examples of possible implementations. Other functional blocks may be used in other implementations without departing from the spirit and scope of the detailed description. In addition, although one or more functional blocks of the present disclosure are represented as separate blocks, one or more of the functional blocks of the present disclosure may be combinations of various hardware and software configurations that perform the same function.

The expression that includes certain components is an open-type expression and merely refers to existence of the corresponding components, and should not be understood as excluding additional components.

It will be understood that when an element is referred to as being "on", "connected to" or "coupled to" another element, it may be directly on, connected or coupled to the other element or intervening elements may be present.

Expressions such as 'first, second', etc. are used only for distinguishing a plurality of components, and do not limit the order or other characteristics between the components.

Hereinafter, embodiments of the present disclosure will be described with reference to the accompanying drawings.

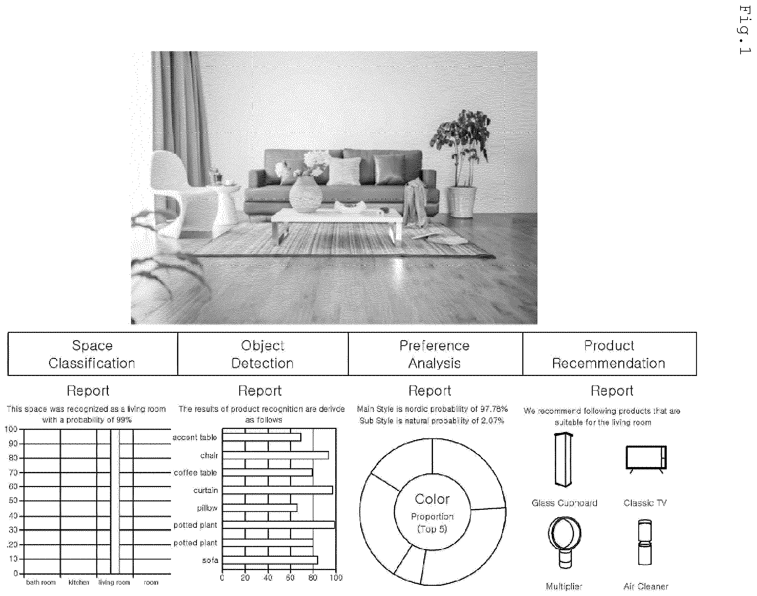

FIG. 1 is an exemplary diagram showing a case in which an image database analysis-based product recommendation apparatus 100 according to an embodiment of the present disclosure recommends products by specifying a use of a space, a type of an object, a style of a space, and color matching with the space.

Referring to FIG. 1, the image database analysis-based product recommendation apparatus 100 according to an embodiment of the present disclosure may update the above-mentioned metadata to be mapped to the image database possessed by a shopping mall, etc., through a procedure of extracting metadata specifying a color combination suitable for a use of a space, a type of an object, a style of a space, a color of a space included in the image and mapping the metadata with an image file of the image database with respect the image database including a plurality of image files, and a service provider of a shopping mall, etc. may perform an operation of recommending a product suitable for a user using the metadata to which the metadata is mapped. The image database analysis-based product recommendation apparatus 100 may use a neural network model and a color combination recommendation algorithm to be described later in order to extract the above-mentioned metadata from an image.

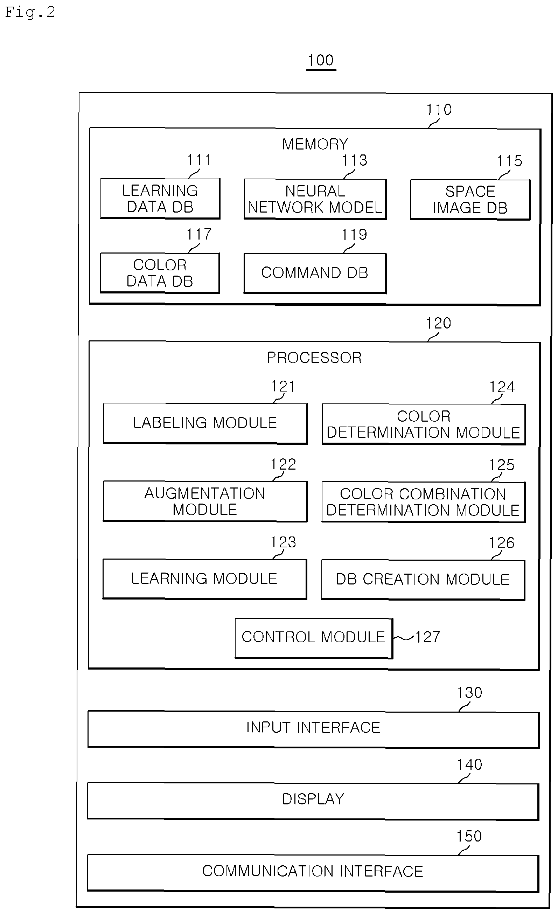

FIG. 2 is a functional block diagram of the image database analysis-based product recommendation apparatus 100 according to an embodiment of the present disclosure.

Referring to FIG. 2, the image database analysis-based product recommendation apparatus 100 according to an embodiment may include a memory 110, a processor 120, an input interface 130, a display 140, and a communication interface 150.

The memory 110 may include a learning data DB 111, a neural network model 113, a space image DB 115, a color data DB 117, and a command DB 119.

The learning data DB 111 may include a space image file obtained by photographing a specific space such as an indoor space or an external space. A space image may be acquired through an external server or an external DB or may be a space image on the Internet. In this case, the space image may be configured with a plurality of pixels (e.g., M*N pixels in the form of M horizontal and N vertical matrix), and each pixel may include pixel information including RGB element values (x, y, z) representing unique color of R (Red), G (Green), and B (Blue).

The neural network model 113 may include a first neural network model for determining a use of a space included in an image, a second neural network model for determining a type of an object included in the image, and a third neural network model for determining a style of a space included in the image. The first to third neural network models may be an artificial intelligence model trained based on an image classification artificial intelligence algorithm to determine a class that specifies specific information included in the image according to each of the above-mentioned purposes. The artificial intelligence model may be generated by an operation of the processor 120, which will be described later, and stored in the memory 110.

The space image DB 115 may include a space image file including objects (e.g., products) arranged in a predetermined space. A space image may be acquired through an external server or an external DB, or may be a space image on the Internet. In this case, the space image may configured with a plurality of pixels (e.g., M*N pixels in the form of M horizontal and N vertical matrix), and each pixel may include pixel information including RGB element values (x, y, z) representing unique color of R (Red), G (Green), B (Blue).

The color data DB 117 may include a color palette including RGB information for a plurality of colors, and a color image scale for classifying colors according to various element values (e.g., soft, dynamic, brightness, saturation, and color).

The command DB 119 may store commands for performing an operation of the processor 120. For example, the command DB 119 may store a computer code for performing operations corresponding to operations of the processor 120, which will be described later.

The processor 120 may control the overall operation of components included in the image database analysis-based product recommendation apparatus 100, the memory 110, the input interface 130, the display 140, and the communication interface 150. The processor 120 may include a labeling module 121, an augmentation module 122, a learning module 123, a color determination module 124, a color combination determination module 125, a DB creation module 126, and a control module 127. The processor 120 may execute the commands stored in the memory 110 to drive the labeling module 121, the augmentation module 122, the learning module 123, the color determination module 124, the color combination determination module 125, the DB creation module 126, and the control module 127, and operations performed by the labeling module 121, the augmentation module 122, the learning module 123, the color determination module 124, the color combination determination module 125, the DB creation module 126, and the control module 127 may be understood as operations performed by the processor 120.

The labeling module 121 may label (map) a class specifying a use of a space (e.g., living room, kitchen, bathroom, or bedroom), a type of an object (e.g., picture frame, bed, carpet, or TV), and a style of a space (e.g., modern, romantic, classic, natural, casual, Nordic, or vintage), which are indicated by each image of a plurality of space images, to create learning data to be used in learning of an artificial intelligence model and store the created learning data in the learning data DB 111. The labeling module 121 may acquire a space image through an external server or an external DB or acquire a space image on the Internet. A class specifying specific information may be pre-labeled to the space image.

The augmentation module 122 may generate a space image (which is a space image changed by the augmentation module, hereinafter referred to as the 'second space image') formed by changing pixel information included in the space image (which is a space image that is not changed by the augmentation module, hereinafter referred to as the 'first space image') stored in the learning data DB 111 within a predetermined range, augment learning data, and additionally store the second space image in the learning data DB 111. In this case, the labeling module 121 may label the class labeled to the first space image to the second space image with respect to the newly created second space image before labeling is performed, thereby shortening a labeling time by automating a labeling process for the augmented learning data.

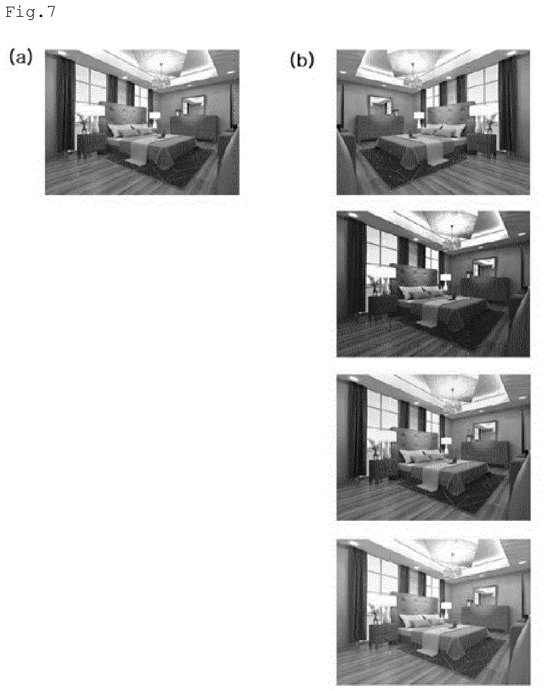

Even if the space image is captured in the same space, information contained in an image file of the space image may be different due to various factors such as various environments or situations in which an actual space image is generated, such as the characteristics of a camera used for photograph, a time at which photograph is performed, or a habit of a person taking a picture. Therefore, in order to improve the performance of an artificial intelligence model, the quantity and quality of data used for learning may be important. In particular, the augmentation module 122 may increase the amount of the learning data through a data augmentation algorithm of FIGS. 7 to 10 for applying variables to be actually generated with respect to one space image to learn variables to be generated according to the characteristics of a camera used for photograph, a time at which photograph is performed, or a habit of a person taking a picture.

The learning module 123 may input the augmented learning data to a model designed based on the image classification algorithm, and learn a weight that derives a correlation between the space image included in the learning data and a class labeled to each space image, and thus may generate an artificial intelligence model for determining a class for a newly input space image based on the correlation of the weight. For example, the learning module 123 may set the space image included in the learning data to be input to an input layer of a neural network designed based on the image classification algorithm, set a class labeled to a style indicated by each space image to be input to an output layer, learn the weight of the neural network to derive the correlation between the space image included in the learning data and a style class labeled to each space image, and generate the neural network.

The image classification algorithm may include a machine learning algorithm that defines and resolves various problems related to an artificial intelligence field. According to embodiments of the present disclosure, learning may be performed through an artificial intelligence model designed according to an algorithm of ResNet, LeNet-5, AlexNet, VGG-F, VGG-M, VGG-S, VGG-16, VGG-19, GoogLeNet, SENet, R-CNN, Fast R-CNN, Faster R-CNN, or SSD.

The artificial intelligence model may refer to an overall model having capability for resolving a problem, which includes nodes that define a network by combining synapses. The artificial intelligence model may be defined by a learning process of updating a model parameter as a weight between layers configuring the model and an activation function of generating an output value.

The model parameter means a parameter determined through learning, and includes a weight of layer connection and a bias of neurons. A hyper parameter means a parameter to be set before learning in a machine learning algorithm, and includes the number of network layers (num_layer), the number of learning data (num_training_samples), the number of classes (num_classes), a learning rate (Learning Rate), the number of learning (epochs), a mini-batch size (mini_batch_size), and a loss function (optimizer).

A hyper parameter of the first neural network model according to an embodiment of the present disclosure may have the following setting values. For example, the number of network layers may be selected from among [18, 34, 50, 101, 152, and 200] in the case of learning data with a large image size. In this case, the number of network layers may be learned as an initial value of 18 in consideration of a learning time, and may be changed to 34 after a predetermined number of learning data is learned, and thus accuracy may be improved. The number of learning data is a value obtained by subtracting the number of evaluation data from the total image data, and 63,806 sheets out of a total of 79,756 sheets may be used as learning data, and the remaining 16,625 sheets may be used as evaluation data. The number of classes may include four classes classified into living room/room/kitchen/bathroom. Since the mini-batch size has a difference in convergence speed and final loss value depending on a size value, an appropriate value may be selected by attempting a size of [32, 64, 128, and 256], and in detail, a size of 128 or 256 may be set. The number of learning times may be set to any one of 10 to 15 values. The learning rate may be set to 0.005 or 0.01. The loss function (objective function) may be set to a default SGD, or may be set to Adam suitable for image classification. However, the above-described setting values are merely examples, and embodiments are not limited to the above numerical values.

The hyper parameter of the third neural network model according to an embodiment of the present disclosure may have the following setting value. For example, the number of network layers may be selected from among [18, 34, 50, 101, 152, and 200] in the case of learning data with an image size. In this case, the number of network layers may be learned as an initial value of 18 in consideration of a learning time, and may be changed to 34 after a predetermined number of learning data is learned, thereby improving accuracy. The number of learning data may be a value obtained by subtracting the number of evaluation data from the total image data, 66,509 sheets out of a total 83,134 sheets may be used as learning data, and the remaining 16,625 sheets may be used as evaluation data. The number of classes may include seven classes classified into Modern/Romantic/Classic/Natural/Casual/Nordic/Vintage. Since the mini-batch size has a difference in convergence speed and final loss value depending on a size value, an appropriate value may be selected by attempting a size of [32, 64, 128, 256], and in detail, a size of 128 or 256 may be set. The number of learning times may be set to any one of 10 to 15, or 30. The learning rate may be set to 0.005 or 0.01. The loss function (objective function) may be set to a default SGD, or may be set to Adam suitable for image classification. However, the above-described setting values are merely examples, and embodiments are not limited to the above values.

A learning objective of the artificial intelligence model may be seen as determining a model parameter for minimizing the loss function. The loss function may be used as an index to determine an optimal model parameter in a learning process of the artificial intelligence model.

The color determination module 124 may determine a type of color constituting the input space image for recommending a color combination, and determine a ratio in which each type of color constituting the space image is used. For example, the color determination module 124 may determine a type of color constituting the space image and a ratio in which each type of color constituting the space image is used, using a k-means clustering algorithm (reference: https://en.wikipedia.org/wiki/K-means_clustering), but the embodiment of the present disclosure is not limited to the illustrated algorithm.

The color combination determination module 125 may determine the position of the first color on a predetermined color image scale using soft and dynamic as elements based on RGB information of each of the selected first colors to determine a soft element value of the first color and a dynamic element value of color.

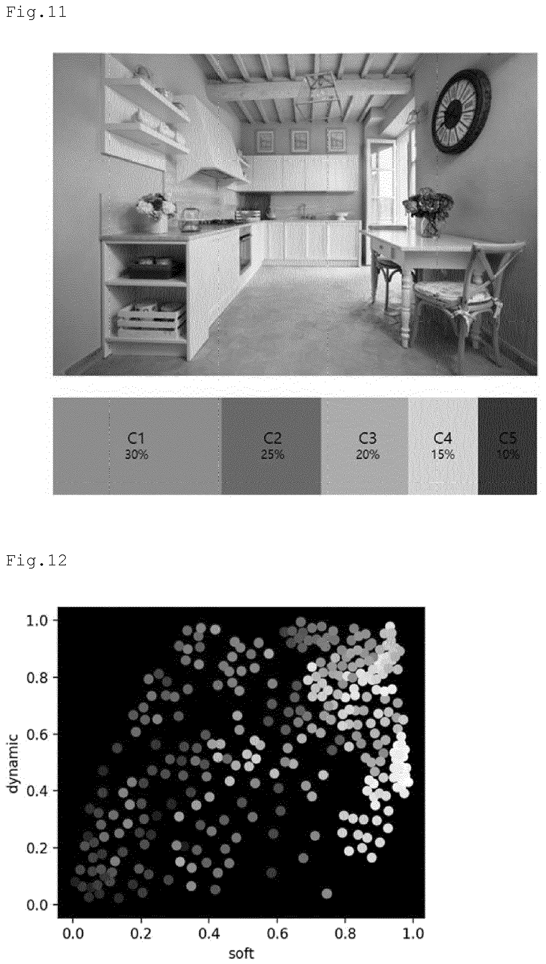

The DB creation module 126 may create a color image scale based on colors that are mainly used on the web, which will be described below with reference to FIGS. 11 to 14.

The input interface 130 may receive a user input. For example, when a class for learning data is labeled, the user input may be received.

The display 140 may include a hardware configuration for outputting an image, including a display panel.

The communication interface 150 may communicate with an external device (e.g., an external DB server, or a user terminal) to transmit and received information. To this end, the communication interface 150 may include a wireless communication module or a wired communication module.

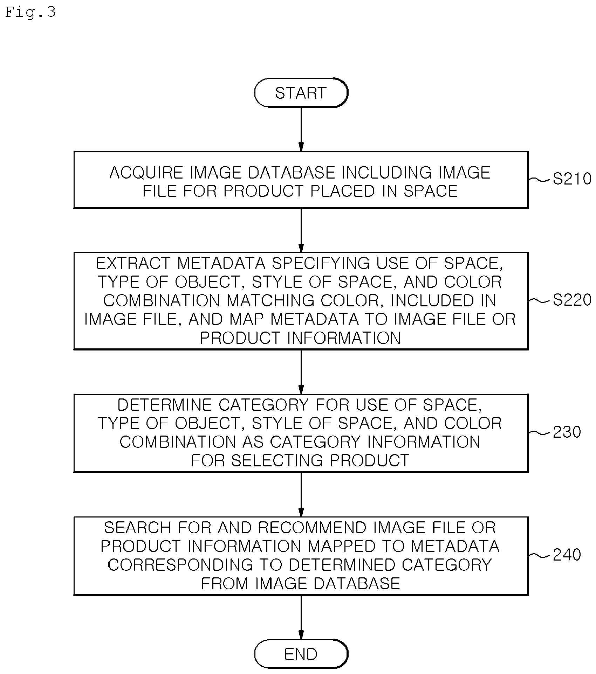

FIG. 3 is an operation flowchart of the image database analysis-based product recommendation apparatus 100 according to an embodiment of the present disclosure. An operation of the image database analysis-based product recommendation apparatus 100 may be understood to be performed under control of the control module 127.

Referring to FIG. 3, the control module 127 may acquire an image database including an image file for products placed in a predetermined space (S210). The image database may include the space image DB 115 or a DB acquired from the outside.

Then, the control module 127 may extract metadata specifying a use of a space included in the image file of the image database, a type of an object included in the image file, a style of a space included in the image file, and a color combination matching the color of a space included in the image file, and map the metadata to the image file or product information of a product (S220). The control module 127 may use first to third neural networks included in the neural network model 113 in order to specify a use of a space, the type of an object, and the style of a space. The control module 127 may use a color combination recommendation algorithm by the color determination module 124 and the color combination determination module 125 in order to specify a color combination.

Then, the control module 127 may determine a category for at least one of a use of a space, a type of an object, a style of a space, and a color combination as category information for selecting a predetermined product. (S230).

Then, the control module 127 may search for and recommend an image file or product information mapped to metadata corresponding to the determined category from the image database (S240).

An operation of determining a category according to an embodiment of the present disclosure may include acquiring a first image by photographing a space of a user, extracting metadata specifying a use of a space, a type of an object, a style of a space, and a color combination, included in the first image, and determining product selection in a category, which does not include metadata for the type of the object extracted from the first image and includes metadata for a use of a space, a style of a space, and a color combination extracted from a sample image. Thus, the user may be recommended a product suitable for his or her space from among products not included in his or her space.

The determining of the category according to an embodiment of the present disclosure may include acquiring a first image by photographing a space of a user, extracting metadata specifying a use of a space, a type of an object, a style of a space, and a color combination, included in the first image, and determining product selection of a category that includes metadata for one object selected by the user from among the metadata for the type of an object extracted from the first image and includes metadata for the use of a space, the style of a space, and the color combination extracted from the first image. Thus, the user may be recommended an appropriate product based on the category determined for his or her space and a product category that is additionally determined by the user.

Hereinafter, operations of generating the first to third neural network models used to map metadata to an image file included in the image database by the image database analysis-based product recommendation apparatus 100 will each be described.

An operation of generating the first neural network according to an embodiment may include the following operation.

First, the labeling module 121 may acquire a plurality of space images and label a class specifying space information corresponding to each of the plurality of space images or may acquire a plurality of space images with a class labeled thereto and generate learning data. Then, the augmentation module 122 may augment the learning data by generating a second space image obtained by changing some or all of pixel information included in the first space image among the plurality of space images. Then, the labeling module 121 may label the class labeled to the first space image in the second space image. Accordingly, the learning module 123 may input the augmented learning data to a model designed based on a predetermined image classification algorithm, and learn a weight of a model that derives a correlation between the space image included in the learning data and a class labeled to the space image, and thus may generate a model for determining a class for the space image based on the correlation.

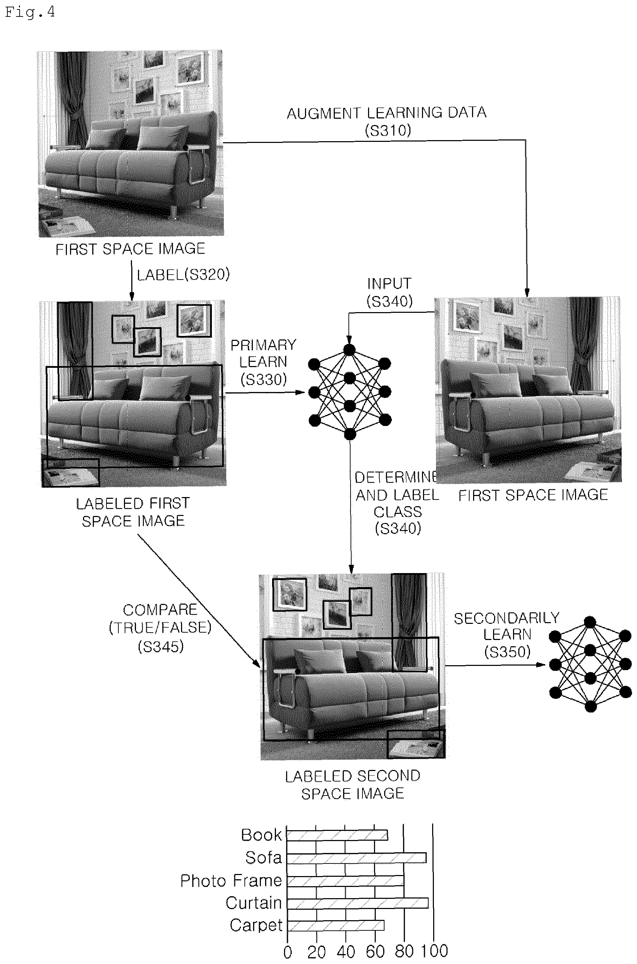

FIG. 4 is an exemplary diagram of an operation of learning a second neural network model for classifying an object by the image database analysis-based product recommendation apparatus 100 according to an embodiment of the present disclosure.

Referring to FIG. 4, an operation of generating the second neural network according to an embodiment may include the following operation.

The augmentation module 122 may acquire a first space image including a first object image and generate a second space image with some or all of the pixel information included in the first space image (S310). The labeling module 121 may specify a bounding box in an area including the first object image in the first space image, and label the first class specifying the first object image in the bounding box to the first space image (S320). The learning module 123 may input the first space image labeled to the model designed based on the image classification algorithm to primarily learn a weight of the artificial intelligence model that derives a correlation between the position of the first object image from the first space image and the first class of the first object image from the first space image, and thus may generate a model specifying the position of the object image included in the space image and determining the class of the object image based on the learned correlation in the weight (S330). Then, the labeling module 121 may input the second space image to the primarily learned model, and label a bounding box in which the primarily learned artificial intelligence model specifies the second object image in the second space image and the second class determined for the second object image by the primarily learned artificial intelligence model, to the second space image (S340). In this case, the labeling module 121 may input the second space image to the primarily learned model, compare the second class determined for the second object image by the artificial intelligence model with the first class, perform an operation of maintaining a value of the second class when the second class and the first class are the same and correcting the value of the second class to the same value as the first class when the second class is different from the first class, correct an error of the primarily learned model, and perform labeling (S345). Even if the second space image is transformed from the first space image, the classes of objects included in the respective images are the same, and thus outlier data may be removed by correcting an error of the primarily learned model using the above method.

Accordingly, the learning module 123 may generate a model that secondarily learns a weight of an artificial intelligence model by performing re-learning of the artificial intelligence model in which the primary learning is completed based on the second space image in which the labeling is completed. (S350). In detail, for secondary learning, the learning module 123 may input the second space image labeled to the primarily learned artificial intelligence model and secondarily learn a weight of an artificial intelligence model that derives a correlation between the position of the second object image in the bounding box from the second space image and the second class of the second object image from the second space image, and thus may generate a model specifying the position of the object image included in the space image and determining the class of the object image based on the learned correlation in the weight.

In this case, the labeling module 121 may generate a set that stores a plurality of classes (e.g., book, sofa, photo frame, curtain, or carpet) specifying object information and may store the set in a learning data DB, and when a bounding box for specifying the first object image is specified in a region of the first object image in the first space image during the labeling of operation S320, the labeling module 121 may output the set stored in the learning data DB, receive selection of the user that performs labeling on the first class specifying the first object image, label the first class to the bounding box region including the first object image, and generate learning data in which an object image is specified. In this case, the bounding box may be configured to include one object image per bounding box and include all border regions of the object image in the bounding box.

An operation of generating the third neural network according to an embodiment may include the following operation.

The labeling module 121 may acquire a plurality of space images and label a class specifying style information corresponding to each of the plurality of space images or may acquire a plurality of space images with the class labeled thereto and generate learning data. Then, the augmentation module 122 may augment the learning data by generating a second space image obtained by changing pixel information included in the first space image among the plurality of space images within a predetermined range. Then, the labeling module 121 may label the class labeled to the first space image to the second space image. Accordingly, the learning module 123 may input the augmented learning data to a model designed based on a predetermined image classification algorithm, and learn a weight of a model that derives a correlation between the space image included in the learning data and a class labeled to the space image, and thus may generate a model for determining a class for a style of the space image based on the correlation.

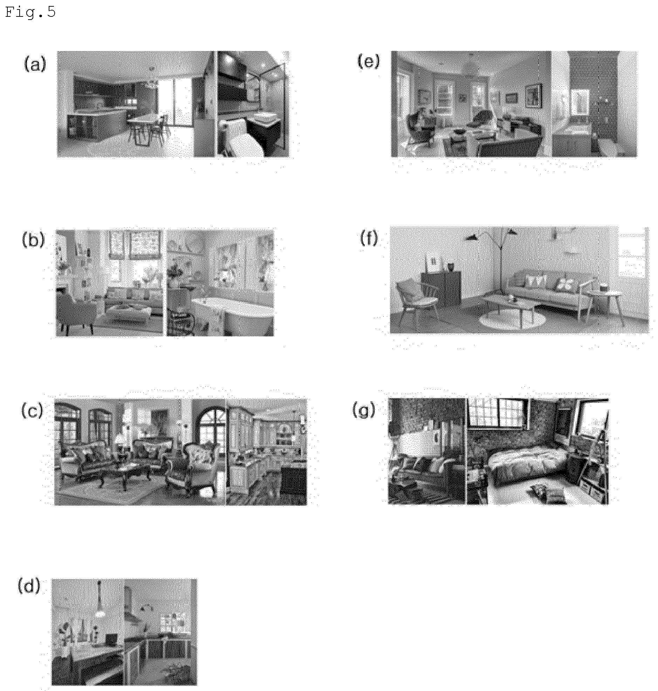

FIG. 5 is an exemplary diagram for explaining a class determined by a third neural network for classifying a style for a space according to an embodiment of the present disclosure.

Referring to FIG. 5, the above-described third neural network may be trained to distinguish a style represented by an input space image, and may determine a class for the style of a space. For example, the class of space image may include a modern style, a romantic style, a classic style, a natural style, a casual style, a Nordic style, and a vintage style.

FIG. 5A shows an example of a space image classified as a class of the modern style. The modern style is a simple and modern interior style and is characterized by mainly using less than two colors. The modern style may use a material that gives a hard feel, such as stainless steel, glass, steel, iron, leather, metal, or marble, or mainly uses monotone color (white, black, achromatic, vivid, navy, and gray) to which other dark tone colors may be added. In addition, the modern style may give a cool, shiny, smooth, or hard feel, have a glossy finish without a pattern, and show a straight or irregular shape. When a pattern is used, the modern style may include the 'minimal style' that pursues simplicity in terms of using a geometric design pattern such as a stripe or a check and emphasizing functionality and practicality. In this case, a class of modern style may be matched with a product having with keywords of "trend, modern, practicality, functionality, monotone, geometric pattern, cool material".

FIG. 5B shows an example of a space image classified as a class of the romantic style. The romantic style is a popular interior style among women with a warm feeling and is characterized by emphasizing a natural material and color. The romantic style is an interior style that uses soft fabrics and cozy and warm materials (cotton fabric, wood, brick, silk, and linen), uses a combination with sky blue and green pastel tones (pale pink, blue, etc.), and gives a romantic and fairy tale feeling, and has a calm and luxurious atmosphere. In addition, the romantic style may include the 'Provence Style' that uses a pattern of an elegant curve, a plant, or a flower, uses a soft lighting to create a delicate and emotional atmosphere overall, and is crude but elegant. In this case, the class of romantic style may be matched with a product having keywords of "romantic, emotional, romantic, pastel tone, soft material, curve, and soft lighting".

FIG. 5C shows an example of a space image classified as a class of the classic style. The classic style is a formal interior style based on European traditional architectural and decorative styles since the Middle Ages, and is characterized by using old and luxurious materials such as leather, fabric, metal, natural wood, and marble. In addition, the classic style may use a calm and dark color that is vivid and toned down, such as brown or black while basically using a color of wood and leather. The classic style is a style that has an old-fashioned and noble atmosphere and is more suitable when a space is large. In addition, the classic style may have a splendid and decorative shape using European-style classic furniture, and may include the 'Antique Style' with an old-fashioned feel or the 'Art Nouveau Style' emphasizing splendor and curves. In this case, the class of the classic style may be matched with a product having keywords of "magnificence, old-fashioned, gorgeous decoration, formative beauty, calm color, gorgeous color, heavy color, wood, and fabric".

FIG. 5D shows an example of a space image classified as a class of the natural style. The natural style is a rustic style using a nature-friendly material, and is characterized by use of furniture made of warm color interiors. In addition, as a natural material such as wood, soil, leather cotton, and hemp are used, wood colors such as white, cream, green, and brown may be mainly used, and wood tones may be used more than pastels. In addition, wooden furniture may be mainly arranged on a white background with a simple design emphasizing a natural feeling of matte or glossy texture or a texture reminiscent of a natural material. Therefore, a 'Planterior' or 'Botanic Style' that directs nature with plants may also be included in the natural style. In this case, the class of the natural style may be matched with a product having keywords of "organic, natural, natural material, wood, white, and brown".

FIG. 5E shows an example of a space image classified as a class of a casual style. The casual style is an interior style that has a free and comfortable image and is youthful, athletic, individual, and light, and is characterized by use of a mixture of natural and artificial materials such as brightly colored wood, metal, glass, and plastic. In addition, the casual style may give a sense of rhythm with a strong color contrast with a lively texture using bright, colorful, and refreshing colors as point colors in addition to basic colors such as white and gray and may have an informal and free atmosphere with functional and light design elements as an important element. In addition, checks, horizontal stripes, and polka dots may be used as representative patterns (geometric or abstract patterns are also used). In this case, the class of the casual style may be matched with a product having keywords of "unique, decorative, splendid, urban, chaotic, sophisticated, bright, colorful, and free".

FIG. 5F shows an example of a space image classified as a class of the Nordic style. The Nordic style is an interior style that fills a space with bright and comfortable color finishing materials, and is characterized by use of various accessories and fabrics. In addition, the Nordic style may use various materials such as natural wood, tiles, and stainless steel and may give a point with soft pastel tones while basically using white, beige, and wood tones. In addition, the Nordic style may use furniture and accessories of monotonous design, and pursue functional, simple, and warmth by adding the original texture and smooth finish. In this case, the class of the Nordic style may be matched with a product having keywords of "clean, neat, fresh, simple, mere, smooth, soft, relaxed, comfortable, cozy, and warm".

FIG. 5G shows an example of a space image classified as a class of the vintage style. The vintage style is a style that naturally exudes traces of the past that evoke memories or nostalgia and is characterized by use of a rough material such as rough metal products, old wood, exposed concrete, iron, or bricks. The vintage style may create faded or peeled colors using dark brown, black, or gray and give a rough and clunky feel. In addition, the vintage style may include the 'industrial style' that exposes a ceiling, a wall, etc. as it is in a comfortable and natural shape. In this case, the class of the vintage style may be matched with a product having keywords of "industrialization, mechanical, factory, warehouse, metal, waste wood, brick, and exposed concrete".

The above-described classification of a style of a space is merely an example, and learning may be performed to determine spaces of various styles according to modifications of embodiment.

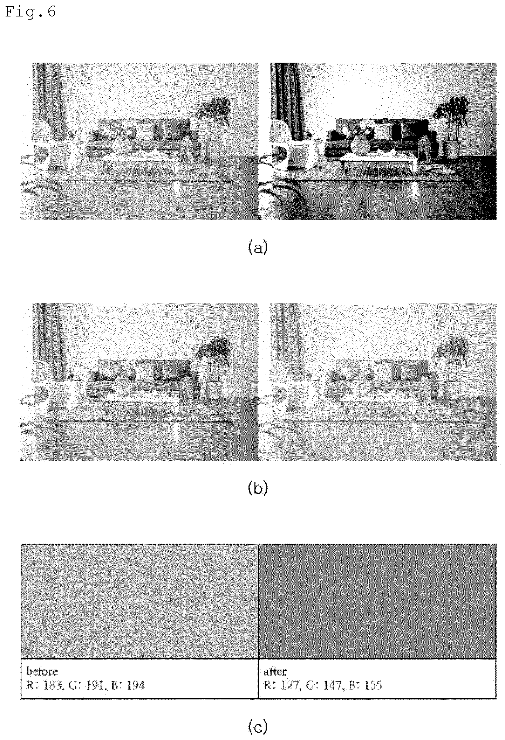

Hereinafter, an operation of generating a second space image from a first space image for augmentation of data to be used for learning by the image database analysis-based product recommendation apparatus 100 will be described in detail with reference to FIGS. 6 to 10.

FIG. 6 is an exemplary diagram of a second space image generated according to an embodiment of augmenting data by modifying pixel information included in a first space image.

The augmentation module 122 may modify pixel information to increase the contrast by making a bright part of pixels of the first space image brighter and a dark part darker, and to reduce the contrast by making the bright part of the pixels of the first space image less bright and the dark park less dark, and thus it may be possible to create a second space image that learns even variables for generating images for one space differently depending on the performance or model of a camera.

To this end, the augmentation module 122 may generate the second space image by changing an element value (x, y, z) constituting RGB information of pixel information included in the first space image to increase an element value having a larger value than a predetermined reference value and reduce an element value having a smaller value than the predetermined reference value.

For example, the augmentation module 122 may generate the second space image with pixel information changed by applying Equation 1 below to pixel information of all pixels of the first space image.

[Equation 1]

$$dst(I) = round(\max(0, \min(\alpha * src(I) - \beta, 255)))$$

(src(I): element value before change of pixel information (x, y, z), $\alpha$: constant, $\beta$: constant, dst(I): element value after change of pixel information (x', y', z'))

According to Equation 1, when $\alpha$ is set to have a value greater than 1, the contrast may be increased by making a bright part of pixels of the first space image brighter and the dark part darker, and when $\alpha$ is set to have a value greater than 0 and smaller than 1, the contrast may be by making the bright part of the pixels of the first space image less bright and the dark part less dark.

Since element values of R, G, and B generally have values between 0 and 255, $\beta$ may be set in such a way that an element value output by α does not become excessively larger than 255, and may be set in such a way that the maximum value does not exceed 255 using a min function.

In addition, since element values of R, G, and B generally have values between 0 and 255, the max function may be used in such a way that an element value output by β does not become smaller than 0 using the max function.

In addition, when α is set to a value having a decimal point, a round function may be used in such a way that an element value of changed pixel information becomes an integer.

Referring to FIG. 6A, a left side shows a first space image, and a right side shows a second space image when α: 2.5 and β: 330 are set and Equation 1 is applied. As seen from the second space image shown in the right side of FIG. 6A, compared to the first space image, a bright part is changed to be brighter and a dark park is changed to be darker and new learning data with increased contrast is generated.

Referring to FIG. 6B, a left side shows a first space image, and a right side shows a second space image when α: 0.8 and β: 50 are set and Equation 1 is applied. As seen from the second space image shown in the right side of FIG. 6B, compared to the first space image, a bright part is changed to be less bright and a dark part is changed to be less dark and new learning data with reduced contrast is generated.

Referring to FIG. 6C, a left side shows a first space image unified with one color (R, G, B) = (183, 191, 194), and a right side shows a second space image when α: 2.5 and β: 330 are set and Equation 1 is applied. A degree by which one piece of pixel information is changed according to Equation 1 through FIG. 6C.

FIG. 7 is an exemplary diagram of a second space image 'b' formed by changing pixel information of a first space image 'a' within a predetermined range by an apparatus for recommending product based on image database analysis.

The color feeling or color of a space image is one of important factors for determining a style of a space. Therefore, the second space image generated when the augmentation module 122 changes the RGB information to a relatively large degree for data augmentation may be highly likely to have a different color from the original first space image, and thus the style of a space indicated by the second space image may be different from the first space image. In this case, the original first space image and the newly generated second space image have different styles, and thus during labeling of the second space image that is the augmented learning data, the original first space image and the changed second space image need to be labeled with different style classes. In this case, excessive change of color may generate data out of realism, and the second space image may need to be labeled with a class different from the first space image.

As shown in an example of FIG. 7, in order to prevent the necessity of such labeling, an embodiment of the present disclosure may provide an image classification model with improved performance through an increase in the quantity of learning data and simultaneous automation of labeling of the augmented learning data by changing RGB information of the first space image (FIG. 7A) within a range of a degree in which a style of a space is not changed to generate a second space image (FIG. 7B) and labeling the second space image with the same class as the class labeled to the first space image with respect to the second space image before newly generated labeling is performed by the labeling module 121.

To this end, the augmentation module 122 may generate the second space image formed by changing pixel information contained in the first space image within a predetermined range through Equation 2 below.

[Equation 2]

$$dst(I) = round(\max(0, \min(src(I) \pm \gamma, 255)))$$

(src (I) : element value before change of pixel information (x, y, z), γ: random number less than or equal to preset value n, dst(I): element value after change of pixel information (x', y', z'))

According to Equation 2, γ is a random number less than a smaller value than a preset value n. Thus, the augmentation module 122 may generate a random number $\gamma_r$, $\gamma_g$, $\gamma_b$ for changing an element value (x, y, z) as any one value of pixels included in the first space image, and change the element value of the corresponding pixel, and this operation may be applied to all pixels included in the first space image or to some selected pixels to generate the second space image. Accordingly, data may be newly created using a method according to Equation 2 to apply, to learning, a variable that color of a captured image changes over time or according to whether light enters or does not enter a space, and the corresponding variable may be trained.

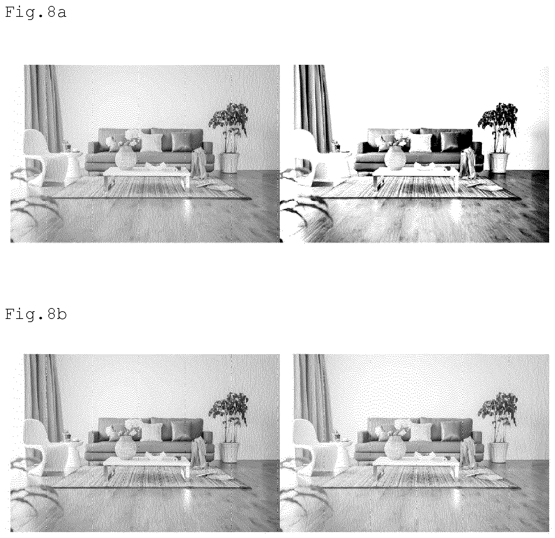

FIG. 8A is an exemplary diagram of a second space image generated according to an embodiment for augmenting data by applying a gray scale to pixel information included in a first space image.

Since determination of a class for a space image is greatly affected by arrangement of objects or patterns of objects, the augmentation module 122 may convert colors monotonically and may then generate learning data to which a variable is applied to better learn the arrangement of objects and the patterns of the objects.

To this end, like a left image of FIG. 8A, the augmentation module 122 may generate a second space image having pixel information with a monotonous color and revealed arrangement and pattern by applying Equation 3 below to all the pixel information of the first space image.

[Equation 3]

$$Y = 0.1667 * R + 0.5 * G + 0.3334 * B$$

(R: x of RGB information (x, y, z) of pixel information, G: y of RGB information (x, y, z) of pixel information, B: z of RGB information (x, y, z) of pixel information, Y: element value after change of pixel information (x', y', z'))

Like a right image of FIG. 8A, the augmentation module 122 may generate a second space image that more clearly reveals the arrangement and pattern of objects than the first space image by applying Equation 5 below to an element derived after increasing the contrast of the first space image through Equation 4 below.

[Equation 4]

$$dst(I) = round(\max(0, \min(\alpha * src(I) - \beta, 255)))$$

(src (I) : element value before change of pixel information, $\alpha$: constant, $\beta$: constant, dst(I): element value after change of pixel information (x', y', z'))

[Equation 5]

$$Y = 0.1667 * R + 0.5 * G + 0.3334 * B$$

(R: x' of (x', y', z') of dst(I) obtained from Equation 4, G: y' of (x', y', z') of dst(I) obtained from Equation 4, B: z' of (x', y', z') of dst(I) obtained from Equation 4, Y: element value after change of pixel information (x", y", z"))

The augmentation module 122 may also generate the second space image in which a pattern of pixel information changed within a predetermined range is changed to sharply appear by applying Equation 2 instead of Equation 4 and applying Equation 5 in the above embodiment using Equations 4 and 5.

FIG. 8B is an exemplary diagram of a second space image generated according to an embodiment for augmenting data by adding noise of some of pixel information included in a first space image.

The augmentation module 122 may generate learning data for learning the case in which noise is generated in an image in the case of zoom in on a camera to perform photograph. To this end, the augmentation module 122 may generate the second space image by adding noise information to some of pixel information contained in the first space image. For example, the augmentation module 122 may generate the second space image with noise information added thereto by generating arbitrary coordinate information through a random number generation algorithm, selecting coordinates of some of pixels included in the first space image, and adding a random number calculated using the random number generation algorithm to an element value of the pixels of the selected coordinates using Equation 6.

[Equation 6]

$$dst(I) = round(\max(0, \min(src(I) \pm N, 255)))$$

(src (I) : element value before change of pixel information (x, y, z), N: random number, dst (I) : element value after change of pixel information (x', y', z'))

As seen from FIG. 8B, a left side shows a first space image and a right side shows a second space image when noise is added using Equation 6.

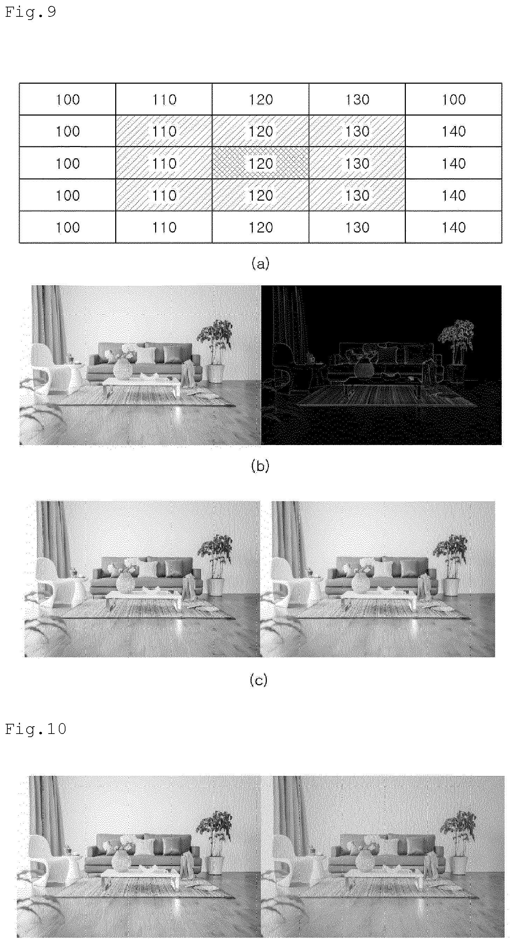

FIG. 9 is an exemplary diagram for explaining a method of generating a second space image by identifying a border region of an object included in a first space image and applying a blur to an area other than the border.

The augmentation module 122 may generate the second space image in which an edge of an object seems to blur through the following embodiment to learn an image captured in a state in which a camera is not in focus.

FIG. 9A shows an example in which each pixel area is identified each pixel area assuming a first space image including 25 pixels in the form of a 5 horizontal x 5 vertical matrix for convenience of explanation. In this case, each pixel may have element values of R, G, and B, but an embodiment will be described based on the element value of Red (R). A number indicated in each pixel area of FIG. 9A means an element value of R.

In the case of FIG. 9A, an operation in a method described below is performed on all pixels, but for convenience of description, the operation will be described based on a pixel at the center. In the case of FIG. 5A, the augmentation module 122 may identify the edge of the object included in the first space image as shown in the right side of FIG. 9B by calculating a difference (R max - R_avg = 10) between the maximum value (R_max = 130) of the element value of R and an average value (R_avg = 120) of the element value of R among pixels included in an NxN area (N is assumed to be 3 in FIG. 9A) using a pixel on which the operation is performed as the center and distinguishing a pixel having a smaller derived value than a preset value n (identified as pixels present in an inner region of an object) and a pixel having a greater derived value than a preset value n (identified as pixels present in a border region of an object). Here, the augmentation module 122 may generate an image shown in a right side of FIG. 9C by applying the Gaussian blur algorithm only to pixels in a region excluding the border region. If a non-pixel area (e.g., an edge side of an image) exists in the NxN area based on the pixel on which the operation is performed, the above-described operation may be omitted and blur processing may be performed for the corresponding pixel.

As such, the augmentation module 122 may perform the above operation on each of all pixels included in the first space image. In the case of a pixel on which an operation is performed, the second space image may be generated by selecting a plurality of pixels included in an NxN (N being an odd number equal to or greater than 3) matrix size including the corresponding pixel in the center as a kernel region, calculating (R_max-R_avg, G_max-G_avg, B_max-B_avg) by subtracting (R_avg, G_avg, B_avg) as respective average values of R, G, and B of the plurality of pixels included in the kernel region from (R_max, G_max, B_max) as the maximum element value among element values of R, G, and B of a plurality of pixels contained in the kernel region, and applying the Gaussian blur algorithm to the corresponding pixel when at least one element value of (R_max-R_avg, G_max-G_avg, B_max-B_avg) is smaller than a preset value n.

When such an operation is performed on all pixels included in the first space image, the second space image for learning an image in which only pixels in the border region with a large color difference have pixel information without change and pixels in the region without color difference are blurred and which is captured in the state in which a camera is not in focus. In this case, for the blur processing, the Gaussian blur algorithm may be applied, but the present disclosure is not limited thereto, and various blur filters may be used.

Referring to FIG. 9B, a left side shows a first space image, and a right side shows an image generated by distinguishing a pixel having a smaller derived value than a preset value n and a pixel having a greater derived value than a preset value n. Since the right image of FIG. 9B also clearly shows the edge of an object, the image may be added to learning data and used to clearly recognize the arrangement and pattern of the object.

As seen from FIG. 9C, a left side shows a first space image, and a right side shows a second space image in which a region other than the edge is blurred as an embodiment obtained by applying N = 7 and n = 20 to the above-described embodiment of FIG. 9.

In addition, in the embodiment described with reference to FIG. 9, a second space image in which an opposite effect to the above-described embodiment is generated by blurring pixel with a greater derived value a preset value n may be added to the learning data DB 111.

FIG. 10 is an exemplary diagram of a second space image generated according to an embodiment of augmenting data by adding noise information according to the Gaussian normal distribution to a first space image.

The augmentation module 122 may generate learning data for learning the case in which a specific part of the image is not in focus. To this end, the augmentation module 122 may generate the second space image into which noise information is inserted by generating random number information that follows the standard Gaussian normal distribution with an average of 0 and a standard deviation of 100 as much as the number of all pixels included in the first space image, and summing random number information to each of all pixels.

With respect to the second space data generated through FIGS. 5 to 8, the labeling module 121 may label the second space image after change with a class labeled to the original first space image before change, and may automate a labeling procedure for augmented learning data, thereby reducing a labeling time.

Then, the learning module 125 may generate a model for determining a class for a space image based on a correlation between the space included in the learning data and a style class labeled to the space image by inputting original learning data (first space image) and augmented learning data (second space image) through the embodiments of FIGS. 6 to 10 to a model designed based on the image classification algorithm and learning a weight of a model for deriving the correlation.

Hereinafter, a color combination recommendation algorithm will be described with reference to FIGS. 11 to 14.

FIG. 11 is an exemplary diagram for explaining an operation of extracting five colors and usage ratios mainly used for a space image by the image database analysis-based product recommendation apparatus 100 according to an embodiment of the present disclosure.

When there are very many colors configuring the space image, if an operation is performed to determine a color combination suitable for all types of colors configuring the space image, it may take a long time because calculation is required for all colors, and it may be inefficient because the operation is performed even on colors included in a very low ratio. Therefore, the color determination module 121 may select some of the colors configuring the space image in order of increasing a ratio of colors used in the space image as a main color to be used for calculation (hereinafter referred to as 'the first color') in order to select the main color to be used for recommending color combination.

Referring to FIG. 11, the color determination module 124 may select n colors configuring a space image in order of increasing a ratio of colors used in the space image. As an example of n = 5 in the case of FIG. 11, the color determination module 124 may convert the sum of the ratios of each of the five colors used in the space image to 100%. (In the case of FIG. 11, C1 color: 30%, C2 color: 25%, C3 color: 20%, C4 color: 15%, C5 color: 10%)

In this case, the color determination module 124 may select color until a cumulative ratio of color obtained by accumulating colors in order of increasing a ratio of colors among the five colors of C1 to C5 exceeds a% (a is a natural number less than or equal to 100) as a first color. For example, when a% is 70%, when ratios of colors C1, C2, and C3 are added up, the cumulative ratio exceeds 70%, and thus the first color may be selected as C1, C2, and C3.

The color combination determination module 125 may determine the position of the first color on a predetermined color image scale using soft and dynamic elements based on RGB information of each of the selected first colors to determine the soft element value of the first color and the dynamic element value of the color.

FIG. 12 is an exemplary diagram of a color image scale in which colors are arranged in a two-dimensional coordinate plane with soft and dynamic axes.

The color image scale is a graph for expressing colors with matching color combinations to be located close together, and is a graph in which colors are classified based on a dynamic value indicating a scale according to whether the color is dynamic or static and a soft value indicating a scale according to whether the color is soft or hard. The color combination determination module 125 may determine coordinates at which color having RGB information of the closest numerical value to the first color is located on the color image scale based on the RGB information of the first color to determine a soft element of the first color and a dynamic element value of the color. The embodiment of the present disclosure may use various color image scales, but may propose a method of generating a color image scale based on colors mainly used on the Web in the part to be described later with regard to the DB creation module 126.

The control module 127 may calculate a color combination element value, which is a coordinate at which a color combination most suitable for a space image is located on the color image scale, based on the element value on the color image scale of each first color.

In this case, the control module 127 may calculate a color combination element value combined by applying a weight to each element value of the first color using a ratio of each first color used in the space image as a weight. In an embodiment in which each element value is weighted and combined, various methods such as a median value, an average value, and a vector sum may be realized, for example, a weighted arithmetic average may be applied.

For example, the control module 127 may calculate a color combination element value by applying a weighted arithmetic mean to a two-dimensional element value of each first color as shown in Equation 7 below using a ratio derived when converting the sum of ratios used in each of the first colors in the space image to 100% as a weight for each of the first colors.

[Equation 7]

$$S_{av} = \sum_{k=1}^{N} \frac{a_k \times S_k}{100} \quad (a_1 + a_2 + ... + a_n = 100)$$

$$D_{av} = \sum_{k=1}^{N} \frac{a_k \times D_k}{100} \quad (a_1 + a_2 + ... + a_n = 100)$$

(N = number of first colors, a = ratio of using a specific first color when converting the sum of ratios of N first colors used in a space image to 100%, S: soft element value, D: dynamic element value, $S_{av}$: weighted arithmetic mean element value for soft values of first colors, $D_{av}$: weighted arithmetic mean element value for dynamic values of first colors)

An example of applying Equation 7 to the example of FIG. 11 will be described. The ratios of C1, C2, and C3 selected as the first colors in FIG. 11 used in the space image are C1: 30%, C2: 25%, C3: 20%. In this case, if the sum of each ratio is converted to 100%,

$$C1: \frac{30}{30+25+20} \times 100 = 40\%$$

$$C2: \frac{25}{30+25+20} \times 100 = 33.3\%$$

$$C3: \frac{20}{30+25+20} \times 100 = 26.7\%$$

In this case, it may be assumed that coordinates of C1 on the color image scale (S-axis, D-axis) are (S1, D1) = (0.5, 0.4), that coordinates of C2 are (S2, D2) = (0.4, 0,3), and coordinates of C3 are (S3, D3) = (0.3, 0.2).
In this case, when Equation 1 is applied, a color combination element value ($S_{av}$, $D_{av}$) may be calculated to (0.4133, 0.3133) as follows.

$$S_{av} = (\frac{40 \times 0.5}{100}) + (\frac{33.3 \times 0.4}{100}) + (\frac{26.7 \times 0.3}{100}) = 0.4133$$

$$D_{av} = (\frac{40 \times 0.4}{100}) + (\frac{33.3 \times 0.3}{100}) + (\frac{26.7 \times 0.2}{100}) = 0.3133$$

The control module 127 may recommend a color combination group including the color combination element value calculated on the color image scale as a color combination suitable for the space image.

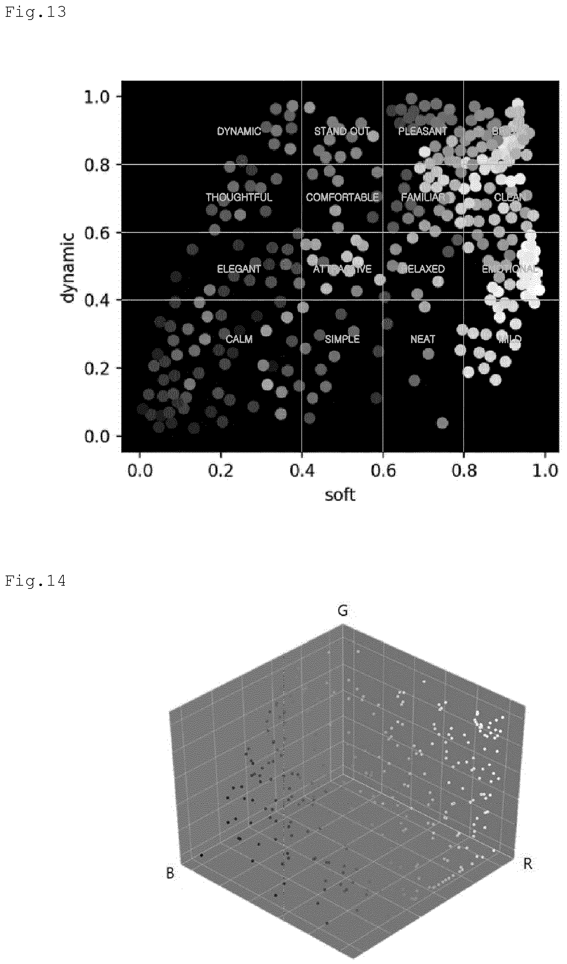

FIG. 13 is an exemplary diagram of groups classified based on ranges of soft values and dynamic values for colors on a color image scale.
Referring to FIG. 13, when the example of FIG. 11 is applied, color combination element values (0.4133, 0.3133) for FIG. 11 are located in a "simple" color combination group located in a soft range 0.4 to 0.6 and a dynamic range 0.0 to 0.4. Accordingly, the control module 127 may recommend a color belonging to the "simple" color combination group on the color image scale as a color combination suitable for the space image.
The DB creation module 126 may create a color image scale based on colors mainly used on the web. For example, the DB creation module 126 may obtain a color palette including 275 colors. The DB creation module 126 may use HTML color palette or JavaScript color palette to use frequently used colors on the web.
Then, the DB creation module 126 needs to determine soft and dynamic values for 275 colors, and in order to efficiently calculate values, the DB creation module 126 may first classify colors based on RGB information of 275 colors to cluster 32 groups. The DB creation module 126 may place colors on the RGB three-dimensional coordinate plane as shown in FIG. 14 based on RGB information of 275 colors, and classify the colors into 32 groups with close colors based on a distance between colors located in the three-dimensional space.
Then, the DB creation module 126 may calculate the median or average value of RGB information based on RGB information of colors included in the group, and select the color closest to the median or average value of RGB information among colors included in the group as a leader color of the group.
Accordingly, the DB creation module 126 may determine a soft value and dynamic value of the leader color based on RGB information only for the leader color of each group. After the determination, the DB creation module 126 may determine the soft value and dynamic value of colors in the same group by adding or subtracting a preset value to the soft value and dynamic value of the leader color based on a difference between the RGB information of the leader color and other colors belonging to the same group as the leader color.
Accordingly, the DB creation module 126 may create a color-based color image scale mainly used on the web by placing soft and dynamic values on the axis based on the soft and dynamic values determined for 275 colors and may create a color combination group as shown in FIG. 4 by classifying the soft value and the dynamic value according to a predetermined range. The 275 colors and 32 groups exemplified above are merely examples, and various colors may be used depending on the implementation method, and the embodiment may be implemented by classifying the colors into a smaller number of groups than the colors used.

The input interface 130 may obtain data input by a user or data on the web, and may receive a space image for an operation of the processor 120. The data may include an image for objects arranged in a predetermined space, a space image including RGB information of pixels configuring the image, a color palette including RGB information for a plurality of colors, and a plurality of color image scales for classifying colors according to a predetermined element value (e.g., soft, dynamic, brightness, and saturation, color).

According to an embodiment of the present disclosure, with respect to a database including a large amount of images held by s shopping mall, metadata specifying a use of a space, products placed in the space, atmosphere of the space, and a color combination matching the color of the space, which are indicated by the image, may be automatically generated, and thus it may be possible to provide convenience to a shopping mall manager in managing product information, and to provide convenience to shopping mall users in product search or product selection.

In addition, in learning the image classification model used in an embodiment of the present disclosure, learning data having high quality while increasing the amount of learning data may be ensured through a data augmentation technology for ensuring various learning data by changing original learning data in order to learn a variable that different images are generated due to various environments or situations such as the characteristics of a photographing camera, or a habit of a person taking a picture even if the same space is photographed. In this case, the embodiment of the present disclosure may provide an image classification model with improved performance and easy learning by automating a labeling process by labeling a class for the augmented learning data in the same way as the original learning data.

An online shopping mall may effectively introduce traffic of consumers to a product page using this image classification model, and the consumers may also search for keywords required for the consumers and use the keywords for search using an image desired by the consumers.

Various effects that are directly or indirectly identified through the present disclosure may be provided.

The embodiments of the present disclosure may be achieved by various means, for example, hardware, firmware, software, or a combination thereof.

In a hardware configuration, an embodiment of the present disclosure may be achieved by one or more application specific integrated circuits (ASICs), digital signal processors (DSPs), digital signal processing devices (DSDPs ), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

Combinations of blocks in the block diagram attached to the present disclosure and combinations of operations in the flowchart attached to the present disclosure may be performed by computer program instructions. These computer program instructions may be installed in an encoding processor of a general purpose computer, a special purpose computer, or other programmable data processing equipment, and thus the instructions executed by an encoding processor of a computer or other programmable data processing equipment may create means for perform the functions described in the blocks of the block diagram or the operations of the flowchart. These computer program instructions may also be stored in a computer-usable or computer-readable memory that may direct a computer or other programmable data processing equipment to implement a function in a particular method, and thus the instructions stored in the computer-usable or computer-readable memory may produce an article of manufacture containing instruction means for performing the functions of the blocks of the block diagram or the operations of the flowchart. The computer program instructions may also be mounted on a computer or other programmable data processing equipment, and thus a series of operations may be performed on the computer or other programmable data processing equipment to create a computer-executed process, and it may be possible that the computer program instructions provide the blocks of the block diagram and the operations for performing the functions described in the operations of the flowchart.

Each block or each step may represent a module, a segment, or a portion of code that includes one or more executable instructions for executing a specified logical function. It should also be noted that it is also possible for functions described in the blocks or the operations to be out of order in some alternative embodiments. For example, it is possible that two consecutively shown blocks or operations may be performed substantially and simultaneously, or that the blocks or the operations may sometimes be performed in the reverse order according to the corresponding function.

As such, those skilled in the art to which the present disclosure pertains will understand that the present disclosure may be embodied in other specific forms without changing the technical spirit or essential characteristics thereof. Therefore, it should be understood that the embodiments described above are illustrative in all respects and not restrictive. The scope of the present disclosure is defined by the following claims rather than the detailed description, and all changes or modifications derived from the meaning and scope of the claims and their equivalent concepts should be construed as being included in the scope of the present disclosure.

**Claims**

1. An apparatus for recommending a product based on analysis of an image database (DB), the apparatus comprising:

   one or more memories configured to store commands for performing a predetermined operation; and
   one or more processors operatively connected to the one or more memories and configured to execute the commands,
   wherein an operation perform by the processor includes:

   acquiring an image database including an image file for a product placed in a predetermined space;
   extracting metadata specifying a use of a space, a type of an object, a style of the space, and a color combination matching color, which are included in the image file, and mapping the metadata to the image file or product information of the product;
   determining a category for at least one of the use of the space, the type of the object, the style of the space, or the color combination as category information for selection of a predetermined product; and
   searching for and recommending the image file or the product information mapped to the metadata corresponding to the determined category from the image database.

2. The apparatus of claim 1, wherein the determining the category includes:

   acquiring a first image by photographing a space of a user;
   extracting metadata specifying a use of a space, a type of an object, a style of the space, and a color combination, which are included in the first image; and
   determining product selection in a category, which does not include metadata for the type of the object extracted from the first image and includes metadata for a use of a space, a style of the space, and a color combination extracted from a sample image.

3. The apparatus of claim 1, wherein the determining the category includes:

   acquiring a first image by photographing a space of a user;
   extracting metadata specifying a use of a space, a type of an object, a style of the space, and a color combination, which are included in the first image; and
   determining product selection of a category, which includes metadata for one object selected by the user among metadata for the type of the object extracted from the first image and includes metadata for the use of the space, the style of the space, and the color combination, extracted from the first image.

4. The apparatus of claim 1, wherein the mapping the metadata further includes:

   extracting the metadata using a first neural network model specifying a use of a space included in a space image, wherein the first neural network model is generated by performing an operation by a processor, the operation including:

   acquiring a plurality of space images and labeling a class specifying space information corresponding to each of the plurality of space images or acquiring a plurality of space images with a class labeled thereto and generating learning data;
   augmenting the learning data by generating a second space image obtained by changing some or all of pixel information included in the first space image among the plurality of space images;
   labeling a class labeled to the first space image to the second space image; and
   inputting the augmented learning data to a model designed based on a predetermined image classification algorithm, learning a weight of the model that derives a correlation between the space image included in the learning data and a class labeled to the space image, and generating a model for determining a class for the space image based on the correlation.

5. The apparatus of claim 1, wherein the mapping the metadata further includes extracting the metadata using a second neural network model specifying a type of an object included in a space image, and wherein the second neural network model is generated by performing an operation by a processor, the operation including:

acquiring a first space image including a first object image and generating a second space image by changing pixel information included in the first space image;

specifying a bounding box in an area including the first object image in the first space image and labeling a first class specifying the first object image in the bounding box;

inputting a model designed based on a predetermined image classification algorithm, primarily learning a weight of the model that derives a correlation between the first object image in the bounding box and the first class, and generating a model specifying an object image included in a space image based on the correlation;

inputting the second space image to the primarily learned model, and labeling a bounding box in which the model specifies a second object image in the second space image and a second class determined for the second object image by the model, to the second space image; and

generating a model that secondarily learns a weight of the model based on the second space image.

6. The apparatus of claim 1, wherein the mapping the metadata further includes:

extracting the metadata using a third neural network model specifying a style of a space included in a space image,

wherein the third neural network model is generated by performing an operation by a processor, the operation including:

acquiring a plurality of space images and labeling a class specifying style information corresponding to each of the plurality of space images or acquiring a plurality of space images with the class labeled thereto and generating learning data;

augmenting the learning data by generating a second space image obtained by changing pixel information included in the first space image among the plurality of space images within a predetermined range;

labeling the class labeled to the first space image to the second space image; and

inputting the augmented learning data to a model designed based on a predetermined image classification algorithm, learning a weight of the model that derives a correlation between the space image included in the learning data and a class labeled to each space image, and generating a model for determining a class for a style of the space image based on the correlation.

7. The apparatus of any one of claims 4, 5, and 6, wherein the generating the second space image includes generating the second space image by changing an element value (x, y, z) constituting RGB information of pixel information included in the first space image to increase an element value having a larger value than a predetermined reference value and reduce an element value having a smaller value than the predetermined reference value.

8. The apparatus of claim 7, wherein the generating the second space image includes generating the second space image from the first space image based on Equation 1:

[Equation 1]

$$dst(I) = round(\max(0, \min(\alpha * src(I) - \beta, 255)))$$

where src(I): element value before change of pixel information (x, y, z), $\alpha$: constant, $\beta$: constant, and dst(I): element value after change of pixel information (x', y', z').

9. The apparatus of any one of claims 4, 5, and 6, wherein the generating the second space image includes generating the second space image from the first space image based on Equation 2:

[Equation 2]

$$dst(I) = round(\max(0, \min(src(I) \pm \gamma, 255)))$$

where src(I): element value before change of pixel information (x, y, z), $\gamma$: random number less than or equal to preset value n, and dst(I): element value after change of pixel information (x', y', z').

10. The apparatus of any one of claims 4, 5, and 6, wherein the generating the second space image includes generating the second space image from the first space image based on Equation 3:

[Equation 3]

$$Y=0.1667*R+0.5*G+0.3334*B$$

where R: x of RGB information (x, y, z) of pixel information, G: y of RGB information (x, y, z) of pixel information, B: z of RGB information (x, y, z) of pixel information, and Y: element value after change of pixel information (x', y', z').

11. The apparatus of any one of claims 4, 5, and 6, wherein the generating the second space image includes generating the second space image from the first space image based on Equations 4 and 5:

[Equation 4]

$$dst(I)=round(\max(0, \min(\alpha * src(I) - \beta, 255)))$$

where src(I): element value before change of pixel information, α: constant, β: constant, and dst(I): element value after change of pixel information (x', y', z'), and

[Equation 5]

$$Y=0.1667*R+0.5*G+0.3334*B$$

where R: x' of (x', y', z') of the dst(I), G: y' of (x', y', z') of the dst(I), B: z' of (x', y', z') of the dst(I), and Y: element value after change of pixel information (x", y", z").

12. The apparatus of any one of claims 4, 5, and 6, wherein the generating the second space image includes generating the second space image by adding noise information to some of pixel information included in the first space image.

13. The apparatus of claim 12, wherein the generating the second space image includes generating the second space image by adding noise information to pixel information of the first space image based on Equation 6:

[Equation 6]

$$dst(I)=round(\max(0, \min(src(I) \pm N, 255)))$$

where src(I): element value before change of pixel information (x, y, z), N: random number, and dst(I): element value after change of pixel information (x', y', z').

14. The apparatus of any one of claims 4, 5, and 6, wherein the generating the second space image includes: generating the second space image by calculating (R_max-R_avg, G_max-G_avg, B_max-B_avg) by subtracting (R_avg, G_avg, B_avg) as respective average values of R, G, and B of the plurality of pixels from (R_max, G_max, B_max) as a maximum element value among element values of R, G, and B of a plurality of pixels contained in an N×N (N being a natural number equal to or greater than 3) matrix size including a first pixel at a center among pixels included in the first space image, and performing an operation of blur processing the first pixel when any one of element values of the (R_max-R_avg, G_max-G_avg, B_max-B_avg) is smaller than a preset value.

15. The apparatus of any one of claims 4, 5, and 6, wherein the generating the second space image includes generating the second space image into which noise information is inserted by generating random number information that follows standard Gaussian normal distribution with an average of 0 and a standard deviation of 100 as much as a number of all pixels included in the first space image, and summing the random number information to each of all pixels.

16. The apparatus of claim 5, wherein the generating the secondarily learned model includes:

inputting the second space image to the primarily learned model, secondarily learning a weight of a model that derives a correlation between the second object image and the second class, and generating a model specifying an object image included in a space image and determining a class based on the correlation.

17. The apparatus of claim 5, wherein the labeling the second space image includes:
inputting the second space image to the primarily learned model, comparing the second class determined for the second object image by the model with the first class, and performing an operation of maintaining a value of the second class when the second class and the first class are equal to each other and correcting the value of the second class to a value equal to the first class when the second class is different from the first class.

18. The apparatus of claim 5, wherein the bounding box is configured to include one object image per bounding box and include all border regions of the object image in the bounding box.

19. The apparatus of claim 1, wherein the specifying the color combination of the mapping the metadata includes:

receiving a space image included in the image file;
determining a type of a color configuring the space image and a ratio in which the type of the color is used in the space image;
selecting a first color as a part of the color configuring the space image in order of increasing the ratio of the color used in the space image;
determining an element value in which each of the first colors is positioned on a predetermined color image scale using soft and dynamic elements;
calculating a combined color combination element value by weighting the element value of each of the first colors using the ratio of each of the first colors used in the space image as a weight; and
recommending a color combination group including the color combination element value on the color image scale as a color combination suitable for the space image.

20. The apparatus of claim 19, wherein the determining the ratio includes determining the type of the color configuring the space image and the ratio in which each type of the color is used in the space image by analyzing the space image based on a k-means clustering algorithm.

21. The apparatus of claim 19, wherein the selecting the first color includes:

selecting n (n being a natural number) colors configuring the space image in order of increasing the ratio of the color used in the space image; and
selecting color until a cumulative ratio of color obtained by accumulating colors in order of increasing a ratio of colors among the n colors exceeds a% (a being a natural number less than or equal to 100) as the color.

22. The apparatus of claim 19, wherein the calculating the color combination element value includes calculating the color combination element value by applying a weighted arithmetic mean to the element value of each of the first colors using a ratio of each of the first colors used in the space image as a weight.

23. The apparatus of claim 22, wherein the calculating the color combination element value includes calculating the color combination element value by applying a weighted arithmetic mean to a two-dimensional element value of each of the first colors using a ratio derived when converting a sum of ratios used in each of the first colors in the space image to 100% as a weight for each of the first colors.

24. The apparatus of claim 23, wherein the calculating the color combination element value includes calculating the color combination element value using Equation 7:

[Equation 7]

$$S_{av} = \sum_{k=1}^{N} \frac{a_k \times S_k}{100} \ (a_1 + a_2 + \ldots + a_n = 100)$$

$$D_{av} = \sum_{k=1}^{N} \frac{a_k \times D_k}{100} \ (a_1 + a_2 + \ldots + a_n = 100)$$

where N = number of first colors, a = ratio of using one first color when converting the sum of ratios of N first colors used in a space image to 100%, S: soft element value, D: dynamic element value, $S_{av}$: weighted arithmetic mean element value for soft values of first colors, and $D_{av}$: weighted arithmetic mean element value for dynamic values of first colors.

25. A method of recommending product based on image database analysis performed by an apparatus for recommending product based on image database analysis, the method comprising:

acquiring an image database including an image file for a product placed in a predetermined space;
extracting metadata specifying a use of a space, a type of an object, a style of the space, and a color combination matching color, which are included in the image file, and mapping the metadata to the image file or product information of the product;
determining a category for at least one of the use of the space, the type of the object, the style of the space, or the color combination as category information for selection of a predetermined product; and
searching for and recommending the image file or the product information mapped to the metadata corresponding to the determined category from the image database.

26. A computer readable recording medium for causing a processor to perform the method of claim 25.

Fig.1

Fig.2

100

MEMORY — 110

| LEARNING DATA DB (111) | NEURAL NETWORK MODEL (113) | SPACE IMAGE DB (115) |

| COLOR DATA DB (117) | COMMAND DB (119) |

PROCESSOR — 120

| LABELING MODULE (121) | COLOR DETERMINATION MODULE (124) |

| AUGMENTATION MODULE (122) | COLOR COMBINATION DETERMINATION MODULE (125) |

| LEARNING MODULE (123) | DB CREATION MODULE (126) |

CONTROL MODULE — 127

INPUT INTERFACE — 130

DISPLAY — 140

COMMUNICATION INTERFACE — 150

Fig.3

```
                        ┌─────────────┐
                        │    START    │
                        └──────┬──────┘
                               │
                               ▼
        ┌──────────────────────────────────────────────┐
        │   ACQUIRE IMAGE DATABASE INCLUDING IMAGE      │
        │    FILE FOR PRODUCT PLACED IN SPACE           │── S210
        └──────────────────────┬───────────────────────┘
                               │
                               ▼
        ┌──────────────────────────────────────────────┐
        │  EXTRACT METADATA SPECIFYING USE OF SPACE,    │
        │  TYPE OF OBJECT, STYLE OF SPACE, AND COLOR    │
        │  COMBINATION MATCHING COLOR, INCLUDED IN      │── S220
        │  IMAGE FILE, AND MAP METADATA TO IMAGE FILE OR│
        │           PRODUCT INFORMATION                 │
        └──────────────────────┬───────────────────────┘
                               │
                               ▼
        ┌──────────────────────────────────────────────┐
        │   DETERMINE CATEGORY FOR USE OF SPACE,        │
        │  TYPE OF OBJECT, STYLE OF SPACE, AND COLOR    │
        │   COMBINATION AS CATEGORY INFORMATION         │── 230
        │           FOR SELECTING PRODUCT               │
        └──────────────────────┬───────────────────────┘
                               │
                               ▼
        ┌──────────────────────────────────────────────┐
        │   SEARCH FOR AND RECOMMEND IMAGE FILE OR      │
        │  PRODUCT INFORMATION MAPPED TO METADATA       │
        │  CORRESPONDING TO DETERMINED CATEGORY         │── 240
        │           FROM IMAGE DATABASE                 │
        └──────────────────────┬───────────────────────┘
                               │
                               ▼
                        ┌─────────────┐
                        │     END     │
                        └─────────────┘
```

Fig.4

FIRST SPACE IMAGE

AUGMENT LEARNING DATA
(S310)

LABEL(S320)

INPUT
(S340)

PRIMARY
LEARN
(S330)

LABELED FIRST
SPACE IMAGE

DETERMINE
AND LABEL
CLASS
(S340)

FIRST SPACE IMAGE

COMPARE
(TRUE/FALSE)
(S345)

SECONDARILY
LEARN
(S350)

LABELED SECOND
SPACE IMAGE

Fig.5

(a)

(e)

(b)

(f)

(c)

(g)

(d)

Fig.6

(a)

(b)

before
R: 183, G: 191, B: 194

after
R: 127, G: 147, B: 155

(c)

Fig.7

(a)

(b)

Fig.8a

Fig.8b

Fig.9

| 100 | 110 | 120 | 130 | 100 |
|-----|-----|-----|-----|-----|
| 100 | 110 | 120 | 130 | 140 |
| 100 | 110 | 120 | 130 | 140 |
| 100 | 110 | 120 | 130 | 140 |
| 100 | 110 | 120 | 130 | 140 |

(a)

(b)

(c)

Fig.10

Fig.11

Fig.12

Fig.13

Fig.14

## INTERNATIONAL SEARCH REPORT

| International application No. |
|---|
| **PCT/KR2021/009473** |

| A. | CLASSIFICATION OF SUBJECT MATTER |
|---|---|

G06Q 30/06(2012.01)i; G06K 9/46(2006.01)i; G06K 9/62(2006.01)i; G06N 3/08(2006.01)i; G06F 16/53(2019.01)i; G06T 7/187(2017.01)i; G06T 5/00(2006.01)i; G06T 7/90(2017.01)i

According to International Patent Classification (IPC) or to both national classification and IPC

| B. | FIELDS SEARCHED |
|---|---|

Minimum documentation searched (classification system followed by classification symbols)

G06Q 30/06(2012.01); G06F 16/00(2019.01); G06F 16/53(2019.01); G06T 3/40(2006.01); G06T 5/00(2006.01); G06T 7/00(2006.01); G06T 9/00(2006.01); H04N 5/217(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이미지(image), 상품(product), 추천(recommend), 색상(color), 메타데이터 (metadata), 카테고리(category), 분석(analyze)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2104312 B1 (HANNAM UNIVERSITY INSTITUTE FOR INDUSTRY-ACADEMIA COOPERATION) 24 April 2020 (2020-04-24)<br>See paragraphs [0015], [0023]-[0024], [0041]-[0043], [0108] and [0111]-[0129], claims 1-3 and 7-12 and figures 12-16. | 1-13,15-26 |
| A | | 14 |
| Y | KR 10-2018-0040865 A (LG ELECTRONICS INC.) 23 April 2018 (2018-04-23)<br>See paragraphs [0168]-[0191], claims 5-6 and figures 4-8b. | 1-13,15-26 |
| Y | JP 6612487 B1 (RAKUTEN, INC.) 27 November 2019 (2019-11-27)<br>See paragraphs [0004]-[0007], [0038]-[0045] and [0054]-[0059], claim 1 and figure 6. | 1-13,15-26 |
| Y | KR 10-1657583 B1 (JK SOFT CO., LTD.) 19 September 2016 (2016-09-19)<br>See paragraphs [0028] and [0035]. | 2,3 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 October 2021** | **28 October 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/009473** |

**C.   DOCUMENTS CONSIDERED TO BE RELEVANT**

| Category* | Citation of document, with indication, where appropriate, of the relevant passages | Relevant to claim No. |
| --- | --- | --- |
| Y | JP 2018-169672 A (MITSUBISHI ELECTRIC INFORMATION SYSTEMS CORP.) 01 November 2018 (2018-11-01)<br>    See abstract, paragraphs [0012]-[0028] and [0047], claims 1-2 and figure 1. | 4,6-13,15 |
| Y | KR 10-2020-0078214 A (SAMSUNG ELECTRONICS CO., LTD.) 01 July 2020 (2020-07-01)<br>    See paragraphs [0042]-[0043] and figure 1. | 7-13,15,17 |
| Y | JP 2011-043872 A (YAHOO JAPAN CORP.) 03 March 2011 (2011-03-03)<br>    See paragraphs [0043] and [0059] and figure 7. | 20-24 |
| PX | KR 10-2234609 B1 (URBANBASE INC.) 02 April 2021 (2021-04-02)<br>    See claim 1.<br>    * This document is a published earlier application that serves as a basis for claiming priority of the present international application. | 1-26 |

Form PCT/ISA/210 (second sheet) (July 2019)

**INTERNATIONAL SEARCH REPORT**
Information on patent family members

International application No.

**PCT/KR2021/009473**

| Patent document cited in search report | | | Publication date (day/month/year) | Patent family member(s) | | | Publication date (day/month/year) |
|---|---|---|---|---|---|---|---|
| KR | 10-2104312 | B1 | 24 April 2020 | KR 10-2019-0109642 | | A | 26 September 2019 |
| KR | 10-2018-0040865 | A | 23 April 2018 | None | | | |
| JP | 6612487 | B1 | 27 November 2019 | JP | 2021-240809 | A1 | 13 September 2021 |
| | | | | WO | 2020-240809 | A1 | 03 December 2020 |
| KR | 10-1657583 | B1 | 19 September 2016 | None | | | |
| JP | 2018-169672 | A | 01 November 2018 | JP | 6441980 | B2 | 19 December 2018 |
| KR | 10-2020-0078214 | A | 01 July 2020 | WO | 2020-130747 | A1 | 25 June 2020 |
| JP | 2011-043872 | A | 03 March 2011 | JP | 4982538 | B2 | 25 July 2012 |
| KR | 10-2234609 | B1 | 02 April 2021 | None | | | |

Form PCT/ISA/210 (patent family annex) (July 2019)